# EUROPEAN PATENT APPLICATION

(11) **EP 4 050 867 A2**
(43) Date of publication of application: **31.08.2022**
(21) Application number: 22179650.1
(22) Date of filing: 17.06.2022
(51) Int. Cl.: H04L 67/1095, H04L 67/564

(54) **METHOD AND APPARATUS OF SYNCHRONIZING DATA, ELECTRONIC DEVICE AND STORAGE MEDIUM**

(30) Priority: 24.06.2021 CN 202110707290
(71) Applicant: Apollo Intelligent Connectivity (Beijing) Technology Co., Ltd., Beijing 100176 (CN)
(72) Inventor: LU, Mingliang, Beijing, 100176 (CN); LIAN, Shanchun, Beijing, 100176 (CN)
(74) Representative: Carpmaels & Ransford LLP

(57) **Abstract**

The present disclosure provides a method and an apparatus of synchronizing data, an electronic device and a storage medium, which relates to a field of a computer technology, in particular to a field of an information flow. A specific implementation scheme includes: determining a second client associated with a first client according to a synchronization request from the first client, wherein the synchronization request contains target data and a first identification information of the first client, and the synchronization request is generated by the first client in response to a first operation for determining the target data; and transmitting the synchronization request to the second client, so that the second client performs a second operation on the target data according to the synchronization request.

## Description

### TECHNICAL FIELD

The present disclosure relates to a field of a computer technology, in particular to a field of an information flow

### BACKGROUND

With an informatization of society and an emergence of a large amount of information as well as a surge of people's requirements for information, an information flow has been formed in an intricate and ever-changing form. In social and economic life, with an extensive development of Internet technology, the information flow plays a more and more important role, for example, in a data synchronization.

The data synchronization refers to a data processing method in which a handheld computer may quickly achieve a data synchronization and information sharing with a desktop computer and a laptop computer, so as to maintain an integrity and unity of data at different terminals.

### SUMMARY

The present disclosure provides a method and apparatus of synchronizing data, an electronic device, and a storage medium.

According to an aspect of the present disclosure, there is provided a method of synchronizing data, including: determining a second client associated with a first client according to a synchronization request from the first client, wherein the synchronization request contains target data and a first identification information of the first client, and the synchronization request is generated by the first client in response to a first operation for determining the target data; and transmitting the synchronization request to the second client, so that the second client performs a second operation on the target data according to the synchronization request.

According to another aspect of the present disclosure, there is provided a method of synchronizing data, including: monitoring a first operation applied to a first client, wherein the first operation is applied to determine target data to be synchronized; generating a synchronization request containing the target data and a first identification information of the first client in response to the first operation; and transmitting the synchronization request to a second client through an intermediate server so that the second client performs a second operation on the target data according to the synchronization request.

According to another aspect of the present disclosure, there is provided a method of synchronizing data, including: monitoring a second operation applied to a second client, wherein the second operation is applied to achieve a synchronization of target data, and the target data is determined according to a first operation applied to a first client; and performing a second operation on the target data according to a synchronization request, wherein the synchronization request is generated by the first client in response to the first operation, and the synchronization request contains the target data and a first identification information of the first client.

According to another aspect of the present disclosure, there is provided an apparatus of synchronizing data, including: a determination module configured to determine a second client associated with a first client according to a synchronization request from the first client, wherein the synchronization request contains target data and a first identification information of the first client, and the synchronization request is generated by the first client in response to a first operation for determining the target data; and a first transmission module configured to transmit the synchronization request to the second client, so that the second client performs a second operation on the target data according to the synchronization request.

According to another aspect of the present disclosure, there is provided an apparatus of synchronizing data, including: a first monitoring module configured to monitor a first operation applied to a first client, wherein the first operation is applied to determine target data to be synchronized; a generation module configured to generate a synchronization request containing the target data and a first identification information of the first client in response to the first operation; and a second transmission module configured to transmit the synchronization request to a second client through an intermediate server, so that the second client performs a second operation on the target data according to the synchronization request.

According to another aspect of the present disclosure, there is provided an apparatus of synchronizing data, including: a second monitoring module configured to monitor a second operation applied to a second client, wherein the second operation is applied to achieve a synchronization of target data, and the target data is determined according to a first operation applied to a first client; and an execution module configured to perform a second operation on the target data according to a synchronization request, wherein the synchronization request is generated by the first client in response to the first operation, and the synchronization request contains the target data and a first identification information of the first client.

According to another aspect of the present disclosure, there is provided an electronic device, including: at least one processor; and a memory communicatively connected to the at least one processor, wherein the memory stores instructions executable by the at least one processor, and the instructions, when executed by the at least one processor, cause the at least one processor to perform the method of synchronizing data described above.

According to another aspect of the present disclosure, there is provided a non-transitory computer-readable storage medium having computer instructions stored thereon, wherein the computer instructions allow a computer to perform the method of synchronizing data described above.

According to another aspect of the present disclosure, there is provided a computer program product containing a computer program, wherein the computer program, when executed by a processor, is allowed to implement the method of synchronizing data described above.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF THE DRAWINGS

The accompanying drawings are used to better understand the solution and do not constitute a limitation to the present disclosure.
FIG. 1 schematically shows an exemplary system architecture in which a method and apparatus of synchronizing data may be applied according to embodiments of the present disclosure.
FIG. 2 schematically shows a flowchart of a method of synchronizing data applied to an intermediate server according to the embodiments of the present disclosure.
FIG. 3 schematically shows a flowchart of a method of synchronizing data applied to a first client according to the embodiments of the present disclosure.
FIG. 4 schematically shows a flowchart of a method of synchronizing data applied to a second client according to the embodiments of the present disclosure.
FIG. 5 schematically shows a system architecture diagram in which a method of synchronizing data is applied according to the embodiments of the present disclosure.
FIG. 6 schematically shows a block diagram of an apparatus of synchronizing data applied to an intermediate server according to the embodiments of the present disclosure.
FIG. 7 schematically shows a block diagram of an apparatus of synchronizing data applied to a first client according to the embodiments of the present disclosure.
FIG. 8 schematically shows a block diagram of an apparatus of synchronizing data applied to a second client according to the embodiments of the present disclosure.
FIG. 9 shows a schematic block diagram of an exemplary electronic device for implementing the embodiments of the present disclosure.

### DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

In the technical solution of the present disclosure, an acquisition, storage and application of a user's personal information involved all comply with provisions of relevant laws and regulations, take necessary confidentiality measures, and do not violate public order and good customs.

A multi-client clipboard synchronization refers to a system clipboard synchronization between different clients and between different operating systems. That is, when a ctrl+c key combination is pressed at a client 1, a content to be copied may be copied to a clipboard memory space in an operating system of the client 1, then the content on a system clipboard of the client 1 needs to be synchronized with a content on a system clipboard of a client 2 by using a method. By a successful synchronization, when ctrl+v is pressed at the client 2, the copied content may be pasted to a desired position of the client 2. The client 2 and the client 1 may have different operating systems or different system versions of the same operating system.

Copy-paste is a function often used in daily office. The multi-client clipboard synchronization is very common in a plurality of office scenes. In consideration of network security, data security and cost, a company generally allocates a client 1 with a low configuration, which may have an Android system or a window system, for an employee. The employee needs to connect the client 1 to the client 2 in a company's intranet, and usually works using the client 2 with a better performance. However, for security reasons, the client 2 generally may not be connected to the extranet. When consulting information, the employee generally needs to copy a content in the client 2 to the client 1 through the multi-client clipboard synchronization, and consult the information in the client 1 supporting extranet access, and then copy a result of consultation to the client 2 for use.

For example, the multi-client clipboard synchronization is generally achieved by the following solutions.
(1) Chat software may be installed at a plurality of clients, and a content synchronization between different clients may be achieved through a file transfer assistant of the chat software and thus may be converted into a copy-paste operation between single clients, which may be specifically implemented as: when the multi-client clipboard synchronization is needed, first pressing ctrl+c at the client 1, then pressing ctrl+v to copy a desired content to a chat input window of the chat software at the client 1, and transmitting the content to the file transfer assistant, then switching to the client 2 to find the file transfer assistant in the same chat software at the client 2 and find the desired content, and pressing ctrl+c to copy the desired content to a system clipboard of the client 2.
(2) Some software with a multi-client synchronous clipboard function may be installed, and the multi-client clipboard synchronization may be achieved by configuring and using the function of the software.
(3) Network disk software may be installed at a plurality of clients, and the content synchronization between different clients may be achieved by sharing the content to a file of a network disk and thus may be converted into a copy-paste operation between single clients.

In a process of achieving a concept of the present disclosure, the inventors found the following problem.

Solution (1) requires the employee to repeatedly perform the copy-paste operation. At the same time, since an account of a chat software may generally log in at one PC only, it is necessary to log out of the chat software at the client 1 when transmitting a content, and then log in to the chat software again at the client 2, which needs complicated operation steps and has a low work efficiency.

Solution (2) is not available in an office scene because the content on the system clipboard may be acquired by a third party. For security reasons, the company may not allow the employee to use such software with potential information security risks.

Similar to solution 1, solution (3) is also inconvenient to operate. Although the step of repeatedly logging in to the chat software is omitted, a plurality of operations are still required to achieve the multi-client clipboard synchronization.

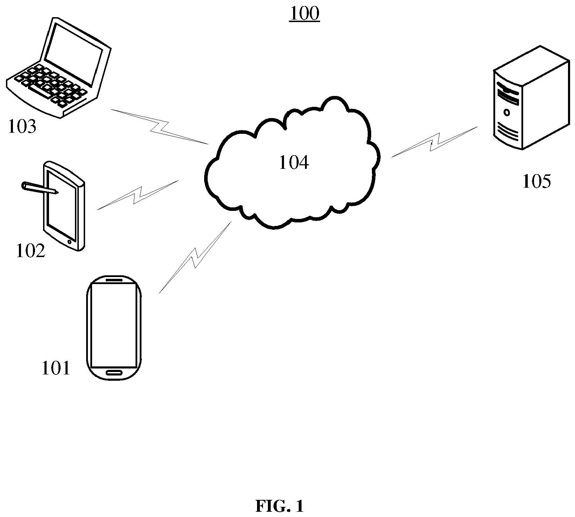

FIG. 1 schematically shows an exemplary system architecture to which a method and apparatus of synchronizing data may be applied according to the embodiments of the present disclosure.

It should be noted that FIG. 1 shows only an example of a system architecture in which the embodiments of the present disclosure may be applied, so as to help those ordinary skilled in the art understand technical contents of the present disclosure, but it does not mean that the embodiments of the present disclosure may not be used for other devices, systems, environments or scenarios. For example, in another embodiment, an exemplary system architecture in which a method and apparatus of processing a content may be applied may include a terminal device, but the method and apparatus of synchronizing data provided by the embodiments of the present disclosure may be implemented without an interaction between the terminal device and a server.

As shown in FIG. 1, a system architecture 100 according to the embodiments may include terminal devices 101, 102, 103, a network 104 and a server 105. The network 104 is a medium for providing a communication link between the terminal devices 101, 102, 103 and the server 105. The network 104 may include various connection types, such as wired and/or wireless communication links, etc.

A user may use the terminal devices 101, 102 and 103 to interact with the server 105 through the network 104 so as to receive or send messages, etc. Various communication client applications, such as knowledge reading applications, web browser applications, search applications, instant messaging tools, mailbox clients and/or social platform software, etc. (for example only), may be installed on the terminal devices 101, 102 and 103.

The terminal devices 101, 102 and 103 may be various electronic devices having display screens and supporting web browsing, including but not limited to smartphones, tablet computers, laptop computers, desktop computers, etc.

The server 105 may be a server that provides various services, such as a background management server that provides a support for a content browsed by a user using the terminal devices 101, 102 and 103 (for example only). The background management server may process, such as analyze a received user request and other data, and feed back a processing result (such as a web page, information, or data acquired or generated according to the user request) to the terminal device.

It should be noted that the method of synchronizing data provided by the embodiments of the present disclosure may generally also be performed by the server 105. Accordingly, the apparatus of synchronizing data provided by the embodiments of the present disclosure may generally be arranged in the server 105. The method of synchronizing data provided by the embodiments of the present disclosure may also be performed by a server or server cluster different from the server 105 and capable of communicating with the terminal devices 101, 102, 103 and/or the server 105. Accordingly, the apparatus of synchronizing data provided by the embodiments of the present disclosure may also be arranged in the server or server cluster different from the server 105 and capable of communicating with the terminal devices 101, 102, 103 and/or the server 105.

For example, when the data synchronization is required, the server 105 may, for example, determine the terminal device 102 associated with the terminal device 101 according to a synchronization request from the terminal device 101, and then transmit the synchronization request to the terminal device 102 so that the terminal device 102 performs a second operation on target data according to the synchronization request. Alternatively, the synchronization request may be processed by a server or server cluster capable of communicating with the terminal devices 101, 102 and/or the server 105, and finally the terminal device 102 performs the second operation on the target data according to the synchronization request from the terminal device 101. The synchronization request may contain target data and a first identification information of the terminal device 101, and the synchronization request is generated by the terminal device 101 in response to a first operation for determining the target data.

Alternatively, the method of synchronizing data provided by the embodiments of the present disclosure may generally be performed by the terminal device 101, 102 or 103. Accordingly, the apparatus of synchronizing data provided by the embodiments of the present disclosure may also be arranged in the terminal device 101, 102 or 103.

For example, when the data synchronization is required, a first operation applied to the terminal device 101 may be monitored, and the first operation is applied to determine target data to be synchronized. A synchronization request containing the target data and the first identification information of the terminal device 101 is then generated in response to the first operation. After that, the synchronization request is transmitted to, for example, the terminal device 102 through the server 105, so that the terminal device 102 may perform the second operation on the target data according to the synchronization request. Alternatively, the monitoring of and responding to the first operation as well as the generation and transmission of the synchronization request may be performed by a server or server cluster capable of communicating with the terminal device 101 and/or the server 105, and finally the terminal device 102 performs the second operation on the target data according to the synchronization request.

For another example, when the data synchronization is required, a second operation applied to the terminal device 102 may be monitored, the second operation is applied to achieve a synchronization of the target data, and the target data is determined according to the first operation applied to the terminal device 101. Then, the second operation is performed on the target data according to the synchronization request. The synchronization request is generated by the terminal device 101 in response to the first operation, and the synchronization request contains the target data and the first identification information of the first client. Alternatively, the second operation may be monitored by the server or server cluster capable of communicating with the terminal device 102 and/or the server 105, and finally the terminal device 102 performs the second operation on the target data according to the synchronization request.

It should be understood that the number of terminal device, network and server in FIG. 1 is merely illustrative. The system architecture may include any number of terminal device, network and server according to implementation needs.

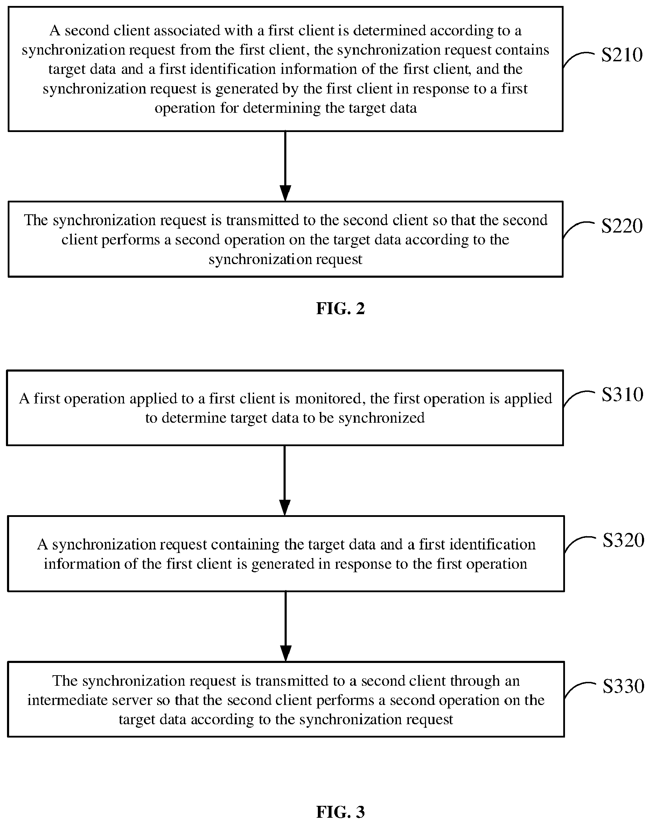

FIG. 2 schematically shows a flowchart of a method of synchronizing data applied to an intermediate server according to the embodiments of the present disclosure.

As shown in FIG. 2, the method includes operation S210 to operation S220.

In operation S210, a second client associated with a first client is determined according to a synchronization request from the first client. The synchronization request contains target data and a first identification information of the first client, and the synchronization request is generated by the first client in response to a first operation for determining the target data.

In operation S220, the synchronization request is transmitted to the second client, so that the second client performs a second operation on the target data according to the synchronization request.

According to the embodiments of the present disclosure, the data synchronization is mainly used to synchronize data of one client to another client and to directly store the data in the other client. The first client and the second client may be two or more independently existing hardware devices, which may take the form of various devices, such as mobile phones, computers, iPads, etc.

According to the embodiments of the present disclosure, the first operation may be, for example, at least one of a select operation or a copy operation. Then, a selected or copied target may be determined in response to the first operation being performed and may be used as the target data. At the same time, upon detecting that the first operation is performed, the first client may simultaneously generate a synchronization request containing the target data and a unique identification information of the first client, so as to determine the data to be synchronized. The synchronization request may be transmitted to another client different from but associated with the first client, such as the second client.

According to the embodiments of the present disclosure, when receiving the synchronization request, the second client may determine the target data to be synchronized according to a content in the synchronization request. The second operation may be, for example, at least one of a copy-paste operation or a paste operation. When the second client detects that the second operation is performed, the target data to be synchronized may be pasted to a target position of the second client.

According to the embodiments of the present disclosure, operation S210 to operation S220 described above may be achieved by, for example, installing a target software on both the first client and the second client. The target software may, for example, monitor and identify a key or an operation performed by a user at the client.

Through the above-mentioned embodiments of the present disclosure, the data synchronization between different clients may be achieved in response to the operation instruction. Then, a synchronization process is more concise, a convenience of a high-frequency operation may be improved, a user may be liberated from a complex manual operation, and a work efficiency may be improved.

The method shown in FIG. 2 will be further described below in combination with specific embodiments.

According to the embodiments of the present disclosure, the above-mentioned first operation may contain an operation instruction for representing a select operation on the target data, and the above-mentioned second operation may contain an operation instruction for representing a copy operation and a paste operation on the target data.

According to the embodiments of the present disclosure, taking the select operation being performed by Ctrl+A, the copy operation being performed by Ctrl+C and the paste operation being performed by Ctrl+V as an example, the operation instruction for representing the select operation on the target data may be, for example, Ctrl+shift+A, the operation instruction for representing the copy operation on the target data may be, for example, Ctrl+shift+C, and the operation instruction for representing the paste operation on the target data may be, for example, Ctrl+shift +V.

According to the embodiments of the present disclosure, taking the following situations as an example, the select operation being performed by selecting the target data with a mouse, the copy operation being performed by selecting a copy instruction in a menu output in response to a right-click on the target data by the mouse, and the paste operation being performed by selecting a paste instruction in a menu output in response to a right-click on a target position by the mouse, then the operation instruction for representing the select operation on the target data may be, for example, selecting an instruction for select in the menu output in response to a right-click on the target data by the mouse, the operation instruction for representing the copy operation on the target data may be, for example, selecting a pre-configured instruction for copy in the menu output in response to a right-click on the target data by the mouse, and the operation instruction for representing the paste operation on the target data may be, for example, selecting a pre-configured instruction for paste in the menu output in response to a right-click on the target position by the mouse.

According to the embodiments of the present disclosure, shortcut commands such as Ctrl+shift+A, Ctrl+shift+C and Ctrl+shift+V may be determined by custom settings combined with the above-mentioned target software. Instructions for select, copy and paste in the menu may be obtained by an automatic configuration in installing the target software. In this embodiment, the target software may be, for example, a software with a function of modifying the system clipboard, through which a key or operation reflecting a user's multi-end clipboard synchronization intention, for example, may be monitored or identified. For example, a press on Ctrl+shift+C and other operations may be monitored by the target software.

According to the embodiments of the present disclosure, when the operation instruction for representing the select operation is performed in the first client, the target software may monitor the operation instruction in real time and transmit target data selected through the operation instruction to the second client in a form of a synchronization request. When the operation instruction for representing the copy operation is performed in the second client, the target software may also monitor the operation instruction in real time and allow the second client to copy the target data in the synchronization request, that is, a copied object in the second client is an object selected in the first client. When the operation instruction for representing the paste operation is performed in the second client, the target data may be pasted to a target position of the second client.

Through the above-mentioned embodiments of the present disclosure, due to a design of a custom operation instruction different from an existing conventional instruction, data that needs to be synchronized and data that does not need to be synchronized may be distinguished, so that a flow resource during operation may be saved, and a synchronization operation may be more intelligent.

According to the embodiments of the present disclosure, the above-mentioned first operation may contain an operation instruction for representing a select operation and a copy operation on the target data, and the above-mentioned second operation may contain an operation instruction for representing a paste operation on the target data.

According to the embodiments of the present disclosure, when the operation instruction for representing the copy operation is performed on selected target data in the first client, the target software may monitor the operation instruction in real time and transmit the target data copied through the operation instruction to the second client in a form of a synchronization request. When the operation instruction for representing the paste operation is performed in the second client, the target software may also monitor the operation instruction in real time and paste the target data to the target position of the second client, that is, a purpose of pasting the target data copied from the first client directly to the second client may be achieved.

Through the above-mentioned embodiments of the present disclosure, due to a design of a custom operation instruction different from an existing conventional instruction, data that needs to be synchronized and data that does not need to be synchronized may be distinguished, so that a flow resource during operation may be saved, and a synchronization operation may be more intelligent.

According to the embodiments of the present disclosure, the first client may be an intranet client and the second client may be an extranet client.

According to the embodiments of the present disclosure, the first client may be an extranet client and the second client may be an intranet client.

Through the above-mentioned embodiments of the present disclosure, the data synchronization between intranet and extranet may be achieved, so that a workflow in an office environment may be simplified, and a work efficiency may be improved.

According to the embodiments of the present disclosure, the determining a second client associated with a first client according to a synchronization request from the first client may include: determining a target user associated with the first client; determining the target client associated with the target user; and determining the target client as the second client.

According to the embodiments of the present disclosure, the target user may be, for example, a user who logs in to the first client or a user who logs in to the target software. The target client may be a client logged in with an account of the target user or a client in which the target software logged in with an account of the target user exists. For example, if a user 1 logs in to the client 1 and the client 2, it may be determined that the client 1 and the client 2 are clients that need the data synchronization.

Through the above-mentioned embodiments of the present disclosure, different clients that need to establish a communication relationship may be determined, so as to achieve the data synchronization between the different clients and simplify the synchronization process.

According to the embodiments of the present disclosure, the determining a second client associated with a first client according to a synchronization request from the first client may include: acquiring a preset mapping table containing a first identification information and a second identification information having a preset mapping relationship with the first identification information, the first identification information is an identification information of the first client and the second identification information is an identification information of the second client; and determining the second client associated with the first client according to the mapping table.

According to the embodiments of the present disclosure, for example, a mapping table for representing an association relationship between different clients may be pre-established. In a subsequent process of the data synchronization, one client associated with the other client may be directly determined according to a content of the mapping table, so as to achieve the data synchronization between the two clients.

Through the above-mentioned embodiments of the present disclosure, different clients that need to establish a communication relationship may be determined, so as to achieve the data synchronization between different clients and simplify the synchronization process.

According to the embodiments of the present disclosure, the transmitting the synchronization request to the second client may include: transmitting the synchronization request to an information security filtering interface to obtain a new synchronization request, the new synchronization request contains target data obtained by information security filtering; and transmitting the new synchronization request to the second client.

According to the embodiments of the present disclosure, the information security filtering interface is used to perform a security filtering on the data information in the synchronization request. For example, a content selected or copied in the intranet client may include a content involving a company secret. After the content is transmitted to the information security filtering interface through an intermediate server along with the synchronization request, an information security platform may filter the content using a preset filtering algorithm. The synchronization request after the content filtering may be continuously transmitted to the extranet client through the intermediate server.

According to the embodiments of the present disclosure, after all the target data in the synchronization request are filtered by the information security platform, when the operation instruction for representing the copy operation or the paste operation is performed in the second client, for example, a prompt box such as "no valid information", "information not copied" or "information may be deleted due to a security problem" may pop up, so as to prompt the user that the information is copied successfully or the information fails to be copied.

Through the above-mentioned embodiments of the present disclosure, due to an introduction of the information security filtering interface in the process of the data synchronization, an information that is not allowed to be leaked may be filtered out, so as to ensure a security in the process of information synchronization.

It should be noted that the above-mentioned method of synchronizing data of the present disclosure is also applicable between remote clients and between clients deployed in the same network segment, which is not limited in the present disclosure.

FIG. 3 schematically shows a flowchart of a method of synchronizing data applied to a first client according to the embodiments of the present disclosure.

As shown in FIG. 3, the method includes operation S310 to operation S330.

In operation S310, a first operation applied to a first client is monitored. The first operation is applied to determine target data to be synchronized.

In operation S320, a synchronization request containing the target data and a first identification information of the first client is generated in response to the first operation.

In operation S330, the synchronization request is transmitted to a second client through an intermediate server, so that the second client performs a second operation on the target data according to the synchronization request.

Through the above-mentioned embodiments of the present disclosure, the data synchronization between different clients may be achieved in response to the operation instruction. Then, a synchronization process is more concise, a convenience of a high-frequency operation may be improved, the user may be liberated from a complex manual operation, and a work efficiency may be improved.

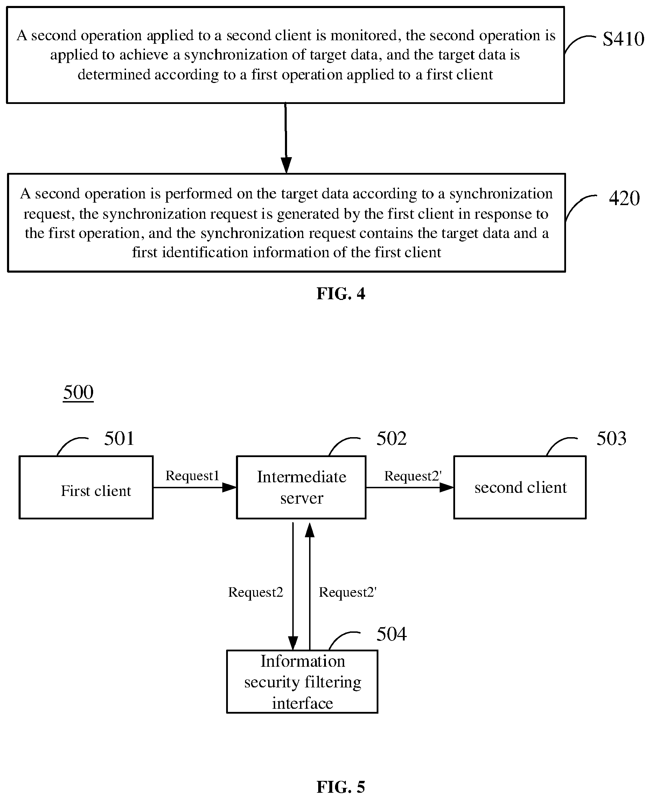

FIG. 4 schematically shows a flowchart of a method of synchronizing data applied to a second client according to the embodiments of the present disclosure.

As shown in FIG. 4, the method includes operation S410 to operation S420.

In operation S410, a second operation applied to a second client is monitored. The second operation is applied to achieve a synchronization of target data, and the target data is determined according to a first operation applied to a first client.

In operation S420, the second operation is performed on the target data according to a synchronization request. The synchronization request is generated by the first client in response to the first operation, and the synchronization request contains the target data and a first identification information of the first client.

Through the above-mentioned embodiments of the present disclosure, the data synchronization between different clients may be achieved in response to the operation instruction. Then, a synchronization process is more concise, a convenience of a high-frequency operation may be improved, the user may be liberated from a complex manual operation, and a work efficiency may be improved.

According to the embodiments of the present disclosure, the first operation may contain an operation instruction for representing a select operation and a copy operation on the target data, and the second operation may contain an operation instruction for representing a paste operation on the target data. The performing a second operation on the target data according to a synchronization request includes: acquiring the target data stored on a clipboard of the second client; and performing the paste operation on the target data.

Through the above-mentioned embodiments of the present disclosure, due to a design of a custom operation instruction different from an existing conventional instruction, data that needs to be synchronized and data that does not need to be synchronized may be distinguished, so that a flow resource during operation may be saved, and a synchronization operation may be more intelligent.

According to the embodiments of the present disclosure, the first operation may contain an operation instruction for representing a select operation on the target data, and the second operation may contain an operation instruction for representing a copy operation and a paste operation on the target data. The performing a second operation on the target data according to a synchronization request includes: acquiring the target data; performing the copy operation on the target data so as to store the target data on a clipboard of the second client; and performing the paste operation on the target data.

Through the above-mentioned embodiments of the present disclosure, due to a design of a custom operation instruction different from an existing conventional instruction, data that needs to be synchronized and data that does not need to be synchronized may be distinguished, so that a flow resource during operation may be saved, and a synchronization operation may be more intelligent.

FIG. 5 schematically shows a system flowchart in which a method of synchronizing data is applied according to the embodiments of the present disclosure.

As shown in FIG. 5, the method of synchronizing data according to the embodiments of the present disclosure may be implemented in a system 500. Those ordinary skilled in the art may understand that the method of synchronizing data shown in FIG. 5 is only to demonstrate a principle of the embodiments of the present disclosure, and the embodiments of the present disclosure are not limited thereto.

When a first operation applied to the target data in a first client 501 is monitored, the first client 501 may generate a synchronization request Request1 containing the target data and a first identification information of the first client and transmit the synchronization request Request1 to an intermediate server 502.

The intermediate server 502 may transmit a synchronization request Request2 containing the target data to an information security filtering interface 504.

The information security filtering interface 504 may transmit a synchronization request Request 2' obtained by the information security filtering to the intermediate server.

The intermediate server 504 may transmit the synchronization request Request2' obtained by the information security filtering to a second client 503, so that the second client 503 achieves a synchronization of the target data from the first client 501.

According to the embodiments of the present disclosure, taking a copy-paste operation as an example, when the client 1 detects a press on Ctrl+shift+C by the user, a synchronization request carrying a unique identification information of the client 1 and a content selected and copied by the client 1 is transmitted to the intermediate server. Then, the intermediate server may transmit the acquired unique identification information of the client 1 and the content selected and copied by the client 1 to the information security filtering interface for information security filtering. At the same time, the intermediate server may acquire a client 2 associated with the unique identification information of the client 1 and transmit the synchronization request to the target software of the client 2. Upon receiving the synchronization request, the target software of the client 2 may write the content to the system clipboard of the client 2. When the client 2 detects a press on Ctrl+shift+V, the content on the clipboard may be pasted to a corresponding position of the client 2. The client 1 and the client 2 need to establish an association information, which may be achieved by logging in to the same account using the target software installed on the client 1 and the client 2.

Through the above-mentioned embodiments of the present disclosure, as long as the user presses Ctrl+shift+C at the client 1, the content on the system clipboard of the client 2 may be automatically synchronized with the content copied in the client 1. When the user switches to the client 2, the copy-paste operation between different clients may be achieved by pressing Ctrl+shift+V, just like the copy-paste at a single client. At the same time, the information security filtering interface is introduced, so that on the premise of ensuring a security monitoring of the copied content, the convenience of high-frequency operation may be improved, hands may be freed, and the work efficiency may be improved.

Through the above-mentioned embodiments of the present disclosure, the use of Ctrl+shift+C may also be distinguished from a user's copy-paste intention at a single client, and may further reduce a pressure of the information security filtering interface, because in general, an information security filtering is only necessary when a clipboard content synchronization is performed between two different clients respectively with intranet access right and extranet access right.

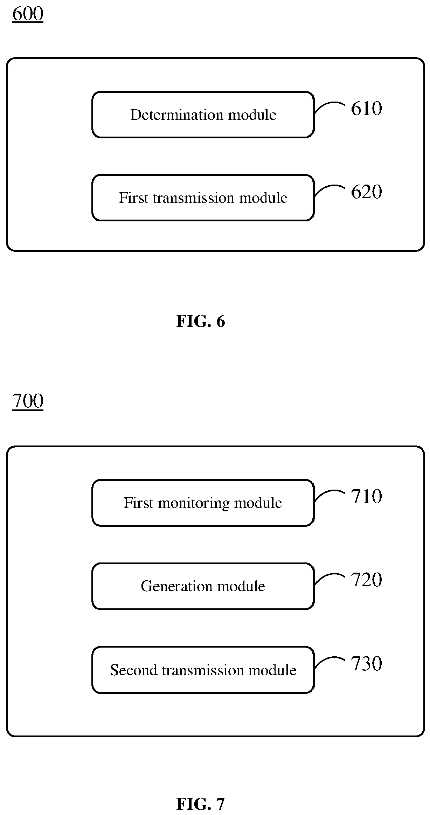

FIG. 6 schematically shows a block diagram of an apparatus of synchronizing data applied to an intermediate server according to the embodiments of the present disclosure.

As shown in FIG. 6, an apparatus 600 of synchronizing data includes a determination module 610 and a first transmission module 620.

The determination module 610 is used to determine a second client associated with a first client according to a synchronization request from the first client. The synchronization request contains target data and a first identification information of the first client, and the synchronization request is generated by the first client in response to a first operation for determining the target data.

The first transmission module 620 is used to transmit the synchronization request to the second client, so that the second client performs a second operation on the target data according to the synchronization request.

According to the embodiments of the present disclosure, the first operation may contain an operation instruction for representing a select operation on the target data, and the second operation may contain an operation instruction for representing a copy operation and a paste operation on the target data.

According to the embodiments of the present disclosure, the first operation may contain an operation instruction for representing a select operation and a copy operation on the target data, and the second operation may contain an operation instruction for representing a paste operation on the target data.

According to the embodiments of the present disclosure, the first client may be an intranet client, and the second client may be an extranet client.

According to the embodiments of the present disclosure, the transmission module includes a first transmission unit and a second transmission unit.

The first transmission unit is used to transmit the synchronization request to an information security filtering interface to obtain a new synchronization request. The new synchronization request contains target data obtained by information security filtering.

The second transmission unit is used to transmit the new synchronization request to the second client.

According to the embodiments of the present disclosure, the determination module includes a first determination unit, a second determination unit and a definition unit.

The first determination unit is used to determine a target user associated with the first client.

The second determination unit is used to determine a target client associated with the target user.

The definition unit is used to determine the target client as the second client.

According to the embodiments of the present disclosure, the determination module includes a first acquisition unit and a third determination unit.

The first acquisition unit is used to acquire a preset mapping table containing a first identification information and a second identification information having a preset mapping relationship with the first identification information. The first identification information is an identification information of the first client, and the second identification information is an identification information of the second client.

The third determination unit is used to determine the second client associated with the first client according to the mapping table.

FIG. 7 schematically shows a block diagram of an apparatus of synchronizing data applied to a first client according to the embodiments of the present disclosure.

As shown in FIG. 7, an apparatus 700 of synchronizing data includes a first monitoring module 710, a generation module 720 and a second transmission module 730.

The first monitoring module 710 is used to monitor a first operation applied to a first client. The first operation is applied to determine target data to be synchronized.

The generation module 720 is used to generate a synchronization request containing the target data and a first identification information of the first client in response to the first operation.

The second transmission module 730 is used to transmit the synchronization request to a second client through an intermediate server, so that the second client performs a second operation on the target data according to the synchronization request.

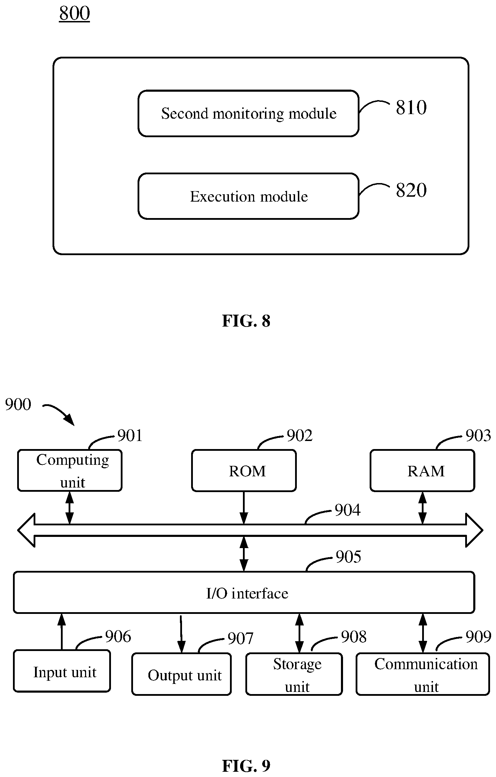

FIG. 8 schematically shows a block diagram of an apparatus of synchronizing data applied to a second client according to the embodiments of the present disclosure.

As shown in FIG. 8, an apparatus 800 of synchronizing data includes a second monitoring module 810 and an execution module 820.

The second monitoring module 810 is used to monitor a second operation applied to a second client. The second operation is applied to achieve a synchronization of target data, and the target data is determined according to a first operation applied to a first client.

The execution module 820 is used to perform a second operation on the target data according to a synchronization request. The synchronization request is generated by the first client in response to the first operation, and the synchronization request contains the target data and a first identification information of the first client.

According to the embodiments of the present disclosure, the first operation may contain an operation instruction for representing a select operation and a copy operation on the target data, and the second operation may contain an operation instruction for representing a paste operation on the target data. The execution module includes a second acquisition unit and a first execution unit.

The second acquisition unit is used to acquire the target data. The target data is stored on a clipboard of the second client.

The first execution unit is used to perform the paste operation on the target data.

According to the embodiments of the present disclosure, the first operation may contain an operation instruction for representing a select operation on the target data, and the second operation may contain an operation instruction for representing a copy operation and a paste operation on the target data. The execution module includes a third acquisition unit, a second execution unit and a third execution unit.

The third acquisition unit is used to acquire the target data.

The second execution unit is used to perform the copy operation on the target data so as to store the target data on a clipboard of the second client.

The third execution unit is used to perform the paste operation on the target data.

According to the embodiments of the present disclosure, the present disclosure further provides an electronic device, a readable storage medium, and a computer program product.

According to the embodiments of the present disclosure, there is provided an electronic device including: at least one processor; and a memory communicatively connected to the at least one processor, the memory stores instructions executable by the at least one processor, and the instructions, when executed by the at least one processor, cause the at least one processor to perform the method described above.

According to the embodiments of the present disclosure, there is provided a non-transitory computer-readable storage medium having computer instructions stored thereon, the computer instructions allow a computer to perform the method described above.

According to the embodiments of the present disclosure, there is provided a computer program product containing a computer program, and the computer program, when executed by a processor, is allowed to implement the method described above.

FIG. 9 shows a schematic block diagram of an example electronic device 900 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 9, the device 900 includes a computing unit 901 that may perform various appropriate actions and processes according to a computer program stored in a read only memory (ROM) 902 or a computer program loaded from a storage unit 908 into a random access memory (RAM) 903. In the RAM 903, various programs and data required for an operation of the device 900 may also be stored. The computing unit 901, the ROM 902 and the RAM 903 are connected to each other via a bus 904. An input/output (I/O) interface 905 is also connected to the bus 904.

A plurality of components in the device 900 are connected to the I/O interface 905, including: an input unit 906, such as a keyboard, a mouse, etc.; an output unit 907, such as various types of displays, speakers, etc.; a storage unit 908, such as a magnetic disk, an optical disk, etc.; and a communication unit 909, such as a network card, a modem, a wireless communication transceiver, etc. The communication unit 909 allows the device 900 to exchange information/data with other devices through a computer network such as an Internet and/or various telecommunication networks.

The computing unit 901 may be various general-purpose and/or special-purpose processing components with processing and computing capabilities. Some examples of the computing unit 901 include, but are not limited to, a central processing unit (CPU), a graphics processing unit (GPU), various dedicated artificial intelligence (AI) computing chips, various computing units running machine learning model algorithms, digital signal processors (DSPS), and any suitable processors, controllers, microcontrollers, etc. The computing unit 901 performs various methods and processes described above, such as the method of synchronizing data. For example, in some embodiments, the method of synchronizing data may be implemented as a computer software program that is tangibly contained in a machine-readable medium, such as the storage unit 908. In some embodiments, part or all of the computer program may be loaded and/or installed on the device 900 via the ROM 902 and/or the communication unit 909. When the computer program is loaded into the RAM 903 and executed by the computing unit 901, one or more steps of the method of synchronizing data described above may be performed. Alternatively, in other embodiments, the computing unit 901 may be configured to perform the method of synchronizing data by any other suitable means (for example, by means of firmware).

Various embodiments of the systems and technologies described herein may be implemented in a digital electronic circuit system, an integrated circuit system, a field programmable gate array (FPGA), an application specific integrated circuit (ASIC), a special standard product (ASSP), a system on chip (SOC), a load programmable logic device (CPLD), a computer hardware, firmware, software and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program code for implementing the method of the present disclosure may be written in any combination of one or more programming language. The program code may be provided to a processor or controller of a general-purpose computer, a dedicated-purpose computer or other programmable data processing device, and the program code, when executed by the processor or controller, may cause the processor or controller to implement functions/operations specified in the flow chart and/or block diagram. The program code may be executed completely on a machine, partially on the machine, partially on the machine and partially on a remote machine as a separate software package, or completely on the remote machine or the server.

In the context of the present disclosure, the machine-readable medium may be a tangible medium that may contain or store a program for use by or in combination with an instruction execution system, a device or an apparatus. The machine-readable medium may be a machine-readable signal medium or a machine-readable storage medium. The machine-readable medium may include, but are not limited to, an electronic, magnetic, optical, electromagnetic, infrared, or semiconductor system, apparatus or device, or any suitable combination thereof. More specific examples of machine-readable storage media may include an electrical connection based on one or more lines, a portable computer disk, a hard disk, a random access memory (RAM), a read only memory (ROM), an erasable programmable read only memory (EPROM or a flash memory), an optical fiber, a portable compact disk read only memory (CD-ROM), an optical storage device, a magnetic storage device or any suitable combination thereof.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

A computer system may include a client and a server. The client and the server are generally far away from each other and usually interact through a communication network. The relationship between the client and the server is generated through computer programs running on the corresponding computers and having a client-server relationship with each other. The server may be a cloud server, a server of distributed system, or a server combined with blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of synchronizing data, comprising:
determining (S210) a second client associated with a first client according to a synchronization request from the first client, wherein the synchronization request contains target data and a first identification information of the first client, and the synchronization request is generated by the first client in response to a first operation for determining the target data; and
transmitting (S220) the synchronization request to the second client, so that the second client performs a second operation on the target data according to the synchronization request.

2. The method of claim 1, wherein the first operation contains an operation instruction for representing a select operation on the target data, and the second operation contains an operation instruction for representing a copy operation and a paste operation on the target data.

3. The method of claim 1, wherein the first operation contains an operation instruction for representing a select operation and a copy operation on the target data, and the second operation contains an operation instruction for representing a paste operation on the target data.

4. The method of claim 1, wherein the first client is an intranet client, and the second client is an extranet client.

5. The method of claim 1, wherein the transmitting the synchronization request to the second client comprises:
transmitting the synchronization request to an information security filtering interface to obtain a new synchronization request, wherein the new synchronization request contains target data obtained by information security filtering; and
transmitting the new synchronization request to the second client.

6. The method of claim 1, wherein the determining a second client associated with a first client according to a synchronization request from the first client comprises:
determining a target user associated with the first client;
determining a target client associated with the target user; and
determining the target client as the second client.

7. The method of claim 1, wherein the determining a second client associated with a first client according to a synchronization request from the first client comprises:
acquiring a preset mapping table containing a first identification information and a second identification information having a preset mapping relationship with the first identification information, wherein the first identification information is an identification information of the first client, and the second identification information is an identification information of the second client; and
determining the second client associated with the first client according to the mapping table.

8. A method of synchronizing data, comprising:
monitoring (S310) a first operation applied to a first client, wherein the first operation is applied to determine target data to be synchronized;
generating (S320) a synchronization request containing the target data and a first identification information of the first client in response to the first operation; and
transmitting (S330) the synchronization request to a second client through an intermediate server, so that the second client performs a second operation on the target data according to the synchronization request.

9. A method of synchronizing data, comprising:
monitoring (S410) a second operation applied to a second client, wherein the second operation is applied to achieve a synchronization of target data, and the target data is determined according to a first operation applied to a first client; and
performing (S420) a second operation on the target data according to a synchronization request, wherein the synchronization request is generated by the first client in response to the first operation, and the synchronization request contains the target data and a first identification information of the first client.

10. The method of claim 9, wherein the first operation contains an operation instruction for representing a select operation and a copy operation on the target data, the second operation contains an operation instruction for representing a paste operation on the target data, and the performing a second operation on the target data according to a synchronization request comprises:
acquiring the target data, wherein the target data is stored on a clipboard of the second client; and
performing the paste operation on the target data.

11. The method of claim 9, wherein the first operation contains an operation instruction for representing a select operation on the target data, the second operation contains an operation instruction for representing a copy operation and a paste operation on the target data, and the performing a second operation on the target data according to a synchronization request comprises:
acquiring the target data;
performing the copy operation on the target data, so as to store the target data on a clipboard of the second client; and
performing the paste operation on the target data.

12. An apparatus of synchronizing data, comprising:
a determination module configured to determine a second client associated with a first client according to a synchronization request from the first client, wherein the synchronization request contains target data and a first identification information of the first client, and the synchronization request is generated by the first client in response to a first operation for determining the target data; and
a first transmission module configured to transmit the synchronization request to the second client, so that the second client performs a second operation on the target data according to the synchronization request.

13. An electronic device (900), comprising:
at least one processor (901); and
a memory communicatively connected to the at least one processor, wherein the memory stores instructions executable by the at least one processor, and the instructions, when executed by the at least one processor, cause the at least one processor to perform the method of any preceding claims.

14. A non-transitory computer-readable storage medium having computer instructions stored thereon, wherein the computer instructions allow a computer to perform the method of any preceding claims.

15. A computer program product containing a computer program, wherein the computer program, when executed by a processor, is allowed to implement the method of any preceding claims.
